# EUROPEAN PATENT APPLICATION

(11) **EP 3 831 226 A1**
(43) Date of publication of application: **09.06.2021**
(21) Application number: 18928608.1
(22) Date of filing: 31.07.2018
(51) Int. Cl.: A24F 47/00

(54) **INFORMATION PROCESSING TERMINAL, INFORMATION PROCESSING METHOD, INFORMATION PROCESSING SYSTEM, AND PROGRAM**

(71) Applicant: Japan Tobacco Inc., Tokyo 105-6927 (JP)
(72) Inventor: HAMAGUCHI, Hideshi, Portland, Oregon 97209 (US)
(74) Representative: Hoffmann Eitle
(86) International application number: PCT/JP2018/028528
(87) International publication number: WO 2020/026319

(57) **Abstract**

Provided is a program or the like for checking a way to inhale on a flavor inhaler or the like, while a user is experiencing the way to inhale. The program causing a computer (200) to perform steps of: detecting (854) externally observable predetermined change that occurs in at least part (120) of a flavor inhaler or an aerosol generation device (100), wherein the predetermined change occurs based on a user's action of inhalation on the flavor inhaler or the aerosol generation device (100); and displaying (856) information (521 and 522) indicating that the predetermined change is being detected.

## Description

### TECHNICAL FIELD

The present invention relates to a flavor inhaler or an aerosol generation device. More specifically, the present invention relates to checking of a way to inhale on a flavor inhaler or an aerosol generation device.

### BACKGROUND ART

Techniques relating to smoking devices such as an electronic cigarette and so on have been developed for several years (for example, refer to Patent Literature 1).

### CITATION LIST

### PATENT LITERATURE

PTL 1: Japanese Patent Application Public Disclosure No. 2017-512459

### SUMMARY OF INVENTION

### TECHNICAL PROBLEM

Regarding smoking devices such as an electronic cigarette and so on, ways to inhale therefor have not yet been established; so that the ways to inhale vary according to respective individuals. Thus, there is a case that a way to inhale by a user may not be suitable to the user. Further, at present, the way to inhale is shown by showing a scene of inhalation performed by a person, who is unrelated to a user, by use of an illustration or a moving image, in addition to a written explanation with respect to the way to inhale; however, the above representation of the way to inhale is merely that showing a scene of inhalation performed by an unrelated person, so that it is sometimes difficult for a user to understand it. Thus, there may be a risk that a user is confused, if it is the first time for the user to use a smoking device such as an electronic cigarette or the like.

Accordingly, it will be convenient if it is possible to check the way to inhale on a smoking device such as an electronic cigarette or the like, while a user is experiencing the way to inhale. In this regard, the applicant has noticed that checking of the way to inhale is useful for a heated tobacco product (which does not require a process to burn tobacco) and a conventional tobacco product (which requires a process to burn tobacco), a nebulizer, and so on, in addition to an electronic cigarette.

The present invention has been achieved in view of the above matters, and a problem thereof is to provide a program and so on which allows a user to check the way to inhale on a flavor inhaler or an aerosol generation device (hereinafter, these may be referred to as "a flavor inhaler or the like") while the use is experiencing the way to inhale. In this regard, a "flavor inhaler" is a device for inhaling flavor components; and, although there is no intention to limit the scope thereof, it is intended that the device may be an electronic cigarette or a heated tobacco product, or conventional tobacco, for example. Further, an "aerosol generation device" is a device for inhaling generated aerosol; and, although there is no intention to limit the scope thereof, it is intended that the device may be an electronic cigarette or a heated tobacco product, or a nebulizer, for example.

### SOLUTION TO PROBLEM

According to an embodiment of the present invention, a program is provided, and the program causing a computer to perform steps of: detecting externally observable predetermined change that occurs in at least part of a flavor inhaler or an aerosol generation device, wherein the predetermined change occurs based on a user's action of inhalation on the flavor inhaler or the aerosol generation device; and displaying information indicating that the predetermined change is being detected.

In an embodiment, it is preferable that the flavor inhaler or the aerosol generation device includes a first end and a second end, one of the first end and the second end is an end that is to be mouthed by the user for inhaling, and the other of the first end and the second end is an end that includes the at least part.

In an embodiment, the predetermined change may comprise emission of light having a predetermined color.

In an embodiment, the information indicating that the predetermined change is being detected may comprise a time and/or a gauge, wherein the time and a value of the gauge increase when the predetermined change is being detected.

The program, which is an embodiment, may cause the computer further to perform steps of: receiving a selection for one of a plurality of ways to inhale, wherein reference times are defined respectively in the plurality of ways to inhale; and defining a maximum value of the gauge based on the reference time defined in the selected way to inhale.

The program, which is an embodiment, may cause the computer further to perform steps of: receiving a selection for one of a plurality of ways to inhale, wherein reference times are defined respectively in the plurality of ways to inhale; and defining a maximum value of the gauge based on the reference time defined in the selected way to inhale.

The program, which is an embodiment, may cause the computer further to perform steps of: allowing a user to select at least one of the plurality of ways to inhale in which reference times are defined respectively, wherein the at least one is a way to inhale that the reference time defined in the way to inhale and the time during which the predetermined change was detected agree within the predetermined error range; sending the selected way to inhale to another computer; and displaying, based on data received from another computer, information indicating a way to inhale selected by a plurality of users.

The program, which is an embodiment, may cause the computer further to perform steps of: allowing a user to select at least one of the plurality of ways to inhale in which reference times are defined respectively, wherein the at least one is a way to inhale that the reference time defined in the way to inhale and the time during which the predetermined change was detected agree within the predetermined error range; and displaying recommendation information based on the selected way to inhale.

The program, which is an embodiment, may causes the computer further to perform steps of: allowing a user to select at least one of the plurality of ways to inhale in which reference times are defined respectively, wherein the at least one is a way to inhale that the reference time defined in the way to inhale and the time during which the predetermined change was detected agree within the predetermined error range; and allowing a user to check or practice the selected way to inhale.

Further, according to an embodiment of the present invention, a method performed by a computer is provided, and the method includes steps of: detecting externally observable predetermined change that occurs in at least part of a flavor inhaler or an aerosol generation device, wherein the predetermined change occurs based on a user's action of inhalation on the flavor inhaler or the aerosol generation device; and displaying information indicating that the predetermined change is being detected.

Further, according to an embodiment of the present invention, a system is provided, and the system comprises: a detection part; a display part; and a control part configured to: detect, based on an output from the detection part, externally observable predetermined change that occurs in at least part of a flavor inhaler or an aerosol generation device, wherein the predetermined change occurs based on a user's action of inhalation on the flavor inhaler or the aerosol generation device, and
display, in the display part, information indicating that the predetermined change is being detected.

### ADVANTAGEOUS EFFECTS OF INVENTION

According to the present invention, a user can check a way to inhale on a flavor inhaler or the like, while the user is experiencing the way to inhale.

### BRIEF DESCRIPTION OF DRAWINGS

Fig. 1A is a block diagram of an example configuration of a flavor inhaler or the like 100 relating to an embodiment of the present invention.
Fig. 1B shows an example schematic outward appearance of the flavor inhaler or the like 100.
Fig. 2 is a block diagram of an example configuration of a system 200 relating to an embodiment of the present invention.
Fig. 3 is a block diagram of an example configuration of a system 300 relating to an embodiment of the present invention.
Fig. 4 shows an example screen 400 used for performing a test relating to detection of predetermined change in the flavor inhaler or the like 100.
Fig. 5A shows an example screen 500 used for checking, by a user, a way to inhale on the flavor inhaler or the like 100.
Fig. 5B shows an example of a UI (user interface) component 520.
Fig. 5C shows an example of the UI component 520.
Fig. 5D shows an example of the UI component 520.
Fig. 5E shows an example of the UI component 520.
Fig. 5F shows an example of the UI component 520.
Fig. 5G shows an example of the UI component 520.
Fig. 5H shows an example of the UI component 520.
Fig. 6 shows an example screen 600 displaying result of checking of a user's way to inhale on the flavor inhaler or the like 100.
Fig. 7 shows an example screen 700 for displaying reference information to a user.
Fig. 8A shows a flowchart of an example method 800 performed by the system 200.
Fig. 8B shows a flowchart of the example method 800 performed by the system 200.
Fig. 8C shows a flowchart of the example method 800 performed by the system 200.
Fig. 9 shows an example of a hardware configuration of a computer.

### DESCRIPTION OF EMBODIMENTS

### 1. Summary of Flavor Inhaler or the Like 100 Relating to Embodiment of the Present Invention

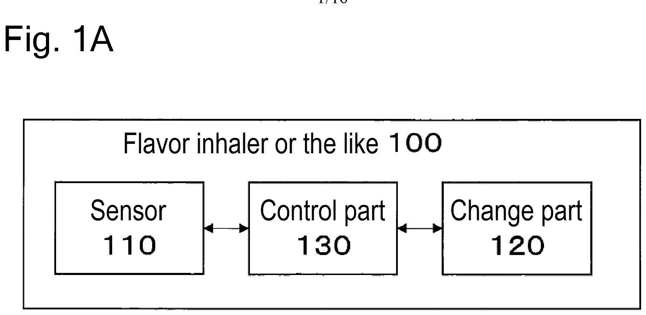

Fig. 1A is a block diagram of an example configuration of a flavor inhaler or the like 100 relating to an embodiment of the present invention. Fig. 1A is that schematically and conceptually showing respective components that the flavor inhaler or the like 100 comprises; and it should be reminded that the figure does not show rigorous arrangement, shapes, sizes, positional relationship, and so on of the respective components and the flavor inhaler or the like 100. Further, it should be reminded that the flavor inhaler or the like 100 may comprise a component which is not shown in the figure, for example, a tobacco capsule, a liquid cartridge, or the like.

110 denotes a sensor for detecting an inhalation action of a user. The sensor 110 may be a sensor of any type for detecting an inhalation action of a user, such as a flow rate sensor, a flow velocity sensor, a pressure sensor, or the like. Further, the sensor 110 may be a button which is pressed by a user for starting an inhalation action. It should be reminded that the sensor 110 may be an inhalation sensor, for example, and may detect inhalation performed by a user on the flavor inhaler or the like 100. Alternatively, the sensor 110 may be an air flow sensor, and may detect an air flow generated by inhalation performed by a user.

120 denotes a change part in which externally observable predetermined change is generated. The change part 120 may be an LED (Light Emitting Diode) which emits light having a predetermined color, for example, a blue LED, and the predetermined change may be emission of predetermined colored light, for example, blue light. It should be reminded that the predetermined color is not limited to blue, and any color may be adopted. Further, the predetermined change may be change in the color of the emitted light or change in intensity of the emitted light that corresponds to strength of inhalation sensed by the sensor 110. Further, the change part 120 is not limited to an LED, and may be a light source which has a different configuration and emits light having a predetermined color.

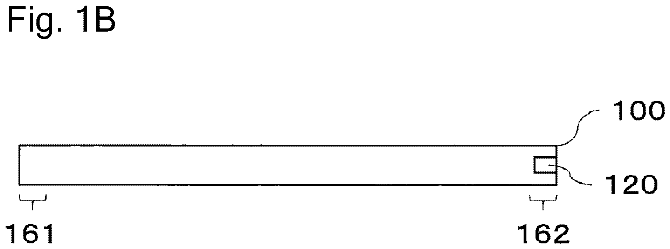

Arrangement relating to the change part 120 will be explained with reference to Fig. 1B. Fig. 1B shows an example schematic outward appearance of the flavor inhaler or the like 100. As shown in Fig. 1B, the flavor inhaler or the like 100 may have the shape of a stick comprising two ends 161 and 162, although there is no intention to limit the configuration thereof. In this embodiment, a user will mouth one end 161 to inhale. In this regard, a user may mouth the one end 161 to inhale, via a mouthpiece which is attachable to the end 161. In the case that the flavor inhaler or the like 100 has a shape such as that shown in Fig. 1B, it is preferable that the change part 120 be positioned in the other end 162 of the two ends. It should be reminded that the change part 120 is at least part of an outer surface of the flavor inhaler or the like 100, and may have any shape, for example, a substantially rectangular shape such as that shown in Fig. 1B, a ring shape along an outer periphery of the flavor inhaler or the like 100 (that is not shown in the figure), or the like.

Here, a reference will be made to Fig. 1A again; then, 130 denotes a control part for generating, at least based on a signal form the sensor 110, the predetermined change in the change part 120. For example, the control part 130 may make the change part 120 emit light having a predetermined color, when the magnitude of a signal from the sensor or the strength of inhalation determined based on the signal is equal to or greater than a predetermined threshold value. Further, for example, the control part 130 may change the color of the light or the intensity of the light emitted from the change part 120, according to the magnitude of a signal from the sensor or the strength of inhalation determined based on the signal. For example, the control part 130 may increase the intensity of emitted light when the strength of inhalation is high, and decrease the intensity of emitted light when the strength of inhalation is low. Further, for example, the control part 130 may divide the strength of inhalation into a plurality of degrees, set predetermined colors respectively to the plurality of degrees, and emit light having a predetermined color corresponding to the strength of inhalation. In this regard, the control part 130 may be an electronic circuit module configured as a microprocessor or a microcomputer.

It should be reminded that the flavor inhaler or the like relating to an embodiment of the present invention comprises conventional tobacco. Although conventional tobacco does not comprise the sensor 110 and the control part 130, the burning part thereof corresponds to the change part 120. This is because, in the burning part of conventional tobacco, predetermined change relating to the color and temperature occurs based on an inhalation action of a user.

### 2. Summary of System Relating to Embodiment of Present Invention

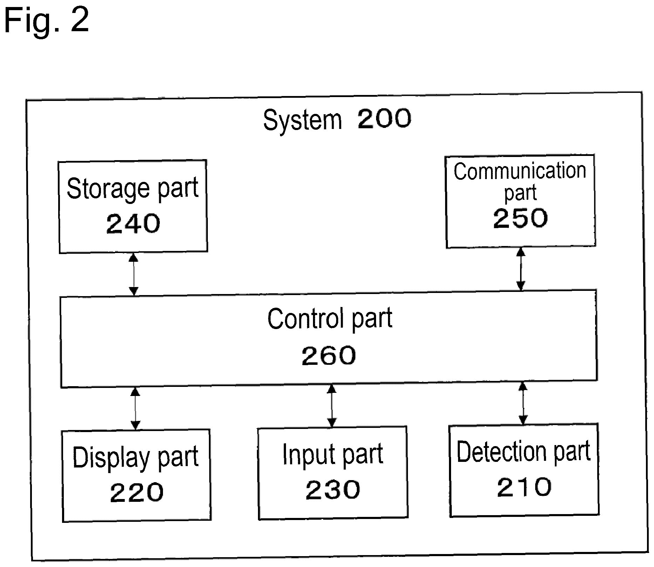

Fig. 2 is a block diagram of an example configuration of a system 200 relating to an embodiment of the present invention. Fig. 2 is that schematically and conceptually showing respective components that the system 200 comprises; and it should be reminded that the figure does not show rigorous arrangement, shapes, sizes, positional relationship, and so on of the respective components and the system 200. Further, it should be reminded that the system 200 may comprise a component which is not shown in the figure. In this regard, although there is no intention to limit the system 200, an example thereof is a smartphone or a tablet, or a computer such as a personal computer or the like. For example, a detection part 210, which will be explained later, may be realized by using a digital camera which is externally connected to a computer.

210 denotes a detection part for detecting externally observable predetermined change generated in part of the flavor inhaler or the like 100, for example, in the change part 120. The detection part 210 may be realized by using at least a digital camera, a temperature sensor, or the like which is a hardware resource.

220 denotes a display part for displaying information indicating that the predetermined change is being detected. The display part 220 may be realized by using at least a display (including a touch panel) or the like which is a hardware resource.

230 denotes an input part for receiving input from a user. The input part 230 may be realized by using at least a keyboard or a mouse, a touch panel display, or the like which is a hardware resource.

240 denotes a storage part for storing a program, data, and so on. The storage part 240 may be realized by using at least a HDD (Hard Disk Drive), a SDD (Solid State Drive), or the like which is a hardware resource.

250 denotes a communication part for communication with other computers. The communication part 250 may be realized by using a network interface or the like which is a hardware resource.

260 denotes a control part for performing various control processes. The control part 260 may be realized by using a processor or the like which is a hardware resource.

The control part 260 may be configured to perform determination relating to a way to inhale by a user. In this regard, the display part 220 can further display result of the determination. Further, the control part 260 may be configured to allow a user to select, via the input part 230, one of a plurality of ways to inhale. In this regard, the display part 220 can further display information based on a selected way to inhale. Further, the control part 260 may be configured to send/receive data via the communication part 250. In this regard, the display part 220 can further display information based on received data.

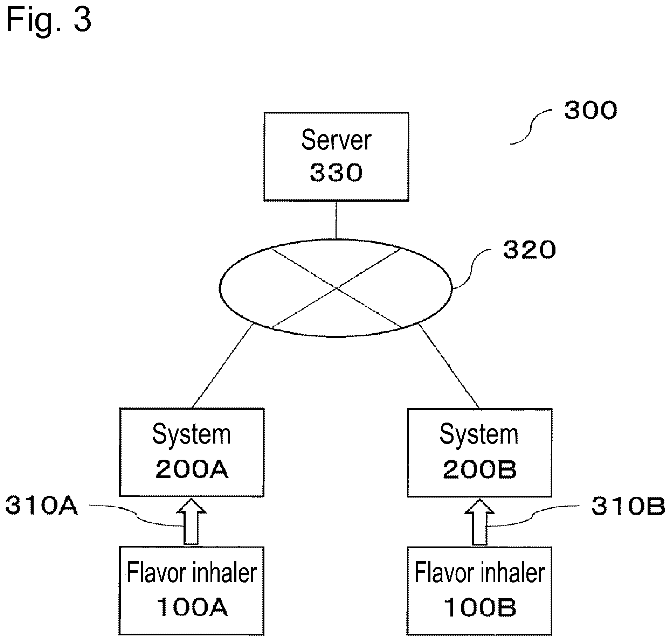

Fig. 3 is a block diagram of an example configuration of a system 300 relating to an embodiment of the present invention. Fig. 3 is that schematically and conceptually showing respective components that the system 300 comprises; and it should be reminded that the figure does not show rigorous arrangement, shapes, sizes, positional relationship, and so on of the respective components and the system 300. Further, it should be reminded that the system 300 may comprise a component which is not shown in the figure. It should be reminded that the system 300 comprises flavor inhalers or the like 100 and the systems 200 as components thereof.

Each of 100A and 100B is that corresponding to the flavor inhaler or the like 100.

Each of 200A and 200B is that corresponding to the system 200.

Each of 310A and 310B represents operation that each of the systems 200A and 200B detects externally observable predetermined change occurring in at least part of each of the flavor inhalers or the like 100A and 100B.

320 shows one or more networks including the Internet. It should be reminded that the systems 200A and 200B can be connected to the networks 320 in a wired manner or a wireless manner.

330 denotes one or more servers, wherein each server is configured by use of one or more computers. At least part of the server 330 may be that for providing the systems 200A and 200B with programs and data for configuring the systems 200A and 200B to perform a method that will be explained later. It should be reminded that the program may be provided in the form of a program that is to be installed in each of the systems 200A and 200B (so-called "app"), or in the form of a program that is to be executed via a web browser that is executed in each of the systems 200A and 200B (a web page configured by using HTML (Hypertext Markup Language), JavaScript (a registered trademark) or the like, for example).

### 3. Screens Displayed by Display Part 220

In the following sections, example screens displayed by the display part 220 will be explained. It should be reminded that, in the following explanation, it is supposed that the detection part 210 is realized by using a camera which is a hardware resource.

### 3-1. Test Screen

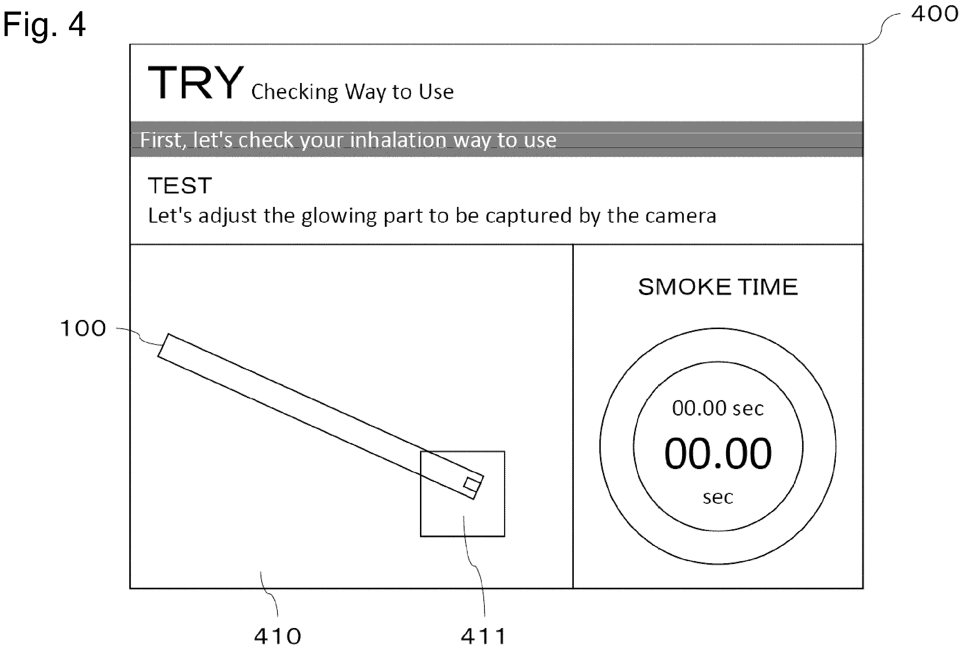

Fig. 4 shows an example screen (hereinafter, this will be referred to as "test screen") 400 used for performing a test relating to detection of the predetermined change in the flavor inhaler or the like 100.

410 denotes a real time image obtained from the detection part 210. 411 denotes a frame drawn in a predetermined area in the real time image 410.

In the test screen 400, a user is requested to take a movie in the state that the user is beginning to inhale on the flavor inhaler or the like 100. More specifically, the user is requested to adjust relative distance between the user and the detection part 210 and positions of them, for positioning the change part 120 of the flavor inhaler or the like 100 in the frame 411, preferably, for positioning the change part 120 only in the frame 411. Thereafter, the user performs an inhalation action; and, if change occurred in the change part 120 in the frame 411 is detected by the system 200, the system 200 determines that detection is successful.

Technical importance to perform detection using the frame 411 will be explained. As explained above, an example of change occurring in the change part 120 is emission of light having a predetermined color. In this regard, for example, if the predetermined color is blue, and if a user wears a blue garment and the scope of detection covers the whole real time image 410, there may be a possibility that the blue garment worn by the user is erroneously detected as emission of blue light. That is, detection using the frame 411 is adopted for the purpose of improving accuracy of detection of predetermined change.

It should be reminded that detection of the predetermined change may be realized by using any image recognition algorithm. Thus, if performance of an image recognition algorithm, that is to be used, is high, and the predetermined change and other types of change can be clearly distinguished by the image recognition algorithm accordingly, the frame 411 is not necessarily required; and the predetermined change may be detected from the whole real time image 410.

### 3-2. Screen for Checking Way to Inhale

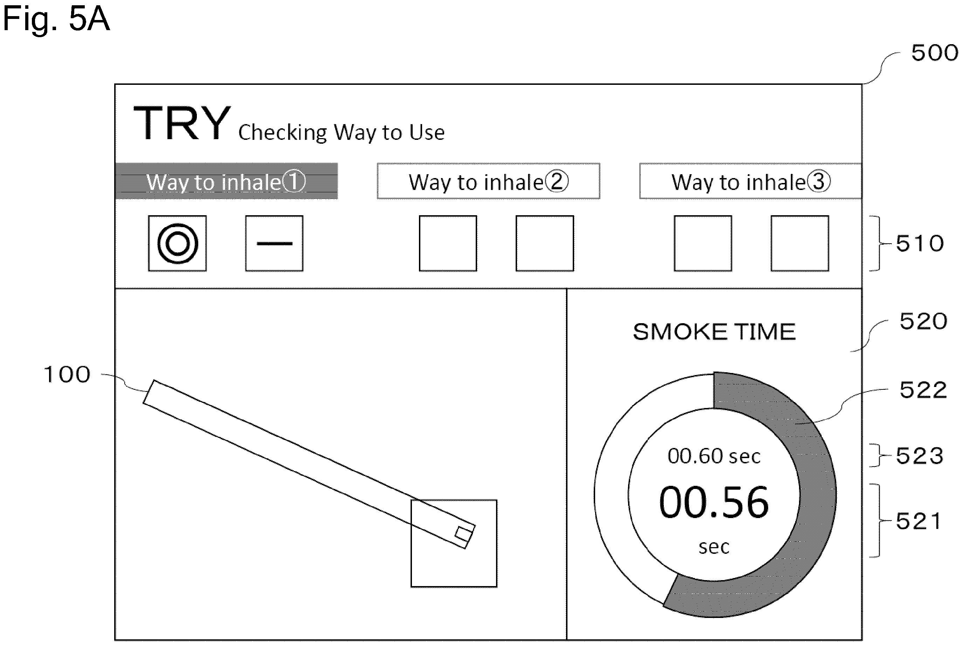

Fig. 5A shows an example screen (hereinafter, this will be referred to as "way-to-inhale checking screen") 500 used for checking, by a user, a way-to-inhale on the flavor inhaler or the like 100.

510 denotes six UI components used for performing checking of a way to inhale (the components will be referred to by using numbers 511-516, from the one on the left side). The UI components 511 and 512, the UI components 513 and 514, and the UI components 515 and 516 are those used for performing checking relating to a first way to inhale, a second way to inhale, and a third way to inhale, respectively. It should be reminded that checking relating to the ways to inhale is not limited to that relating to the three ways to inhale, and any number of ways to inhale can be adopted. It is supposed that checking relating to a way to inhale is performed multiple times. In this regard, checking relating to a way to inhale may be performed a single time, i.e., the checking is not necessarily performed multiple times. Each checking process is started by selecting each of UI components 511-516. In this regard, the way-to-inhale checking screen 500 shown in Fig. 5A is when a first checking process relating to a first way to inhale has been completed, a second checking process relating to the first way to inhale is being performed, and checking processes relating to a second way to inhale and a third way to inhale have not yet been performed.

520 denotes a UI component for showing information indicating that an externally observable predetermined change occurring in at least part of the flavor inhaler or the like 100, for example, in the change part 120, is being detected. 521 and 522 denote, respectively, detection time that increases and a gauge in which a value thereof increases, when the predetermined change is being detected, and they are information indicating that the predetermined change is being detected. Although the gauge 522 shown in each of Figs. 5A-6H has a circular shape in which the position corresponding to the value of zero and the position corresponding to the maximum value are adjacent to each other, the shape of the gauge is not limited thereto. 523 denotes time elapsed since a checking process of a way to inhale is started.

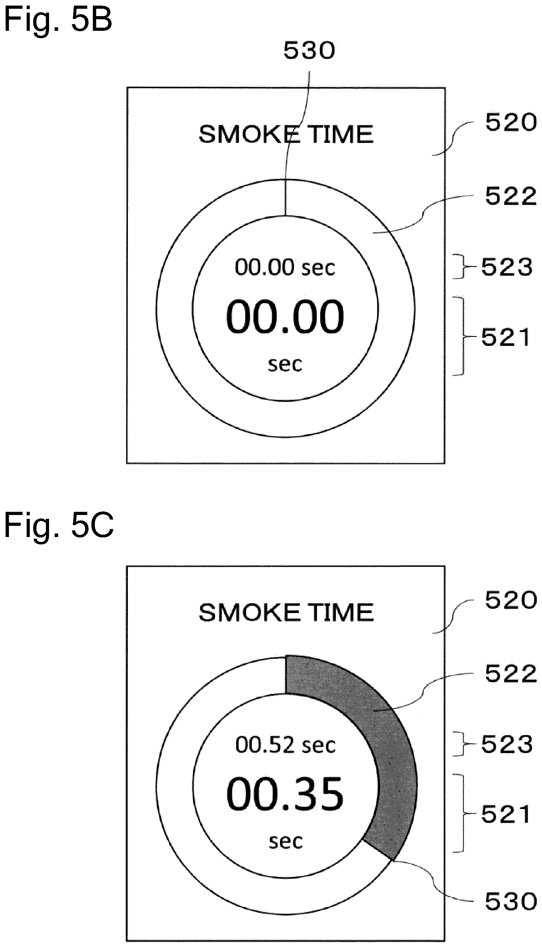

In the following sections, examples with respect to the UI component 520 will be explained with reference to Figs. 5B-5H.

Fig. 5B shows an example of the UI component 520 in the state right after completion of selection of the UI component 510. In Fig. 5B, the detection time 521 is zero, and the present value 530 of the gauge 522 is also zero. Further, in Fig. 5B, the elapsed time 523 is zero.

Fig. 5C shows an example of the UI component 520 when 0.52 seconds has elapsed since completion of selection of the UI component 510. In Fig. 5C, the elapsed time 523 is 0.52 seconds. On the other hand, the detection time 521 is 0.35 seconds, and the present value 530 of the gauge 522 also represents a value corresponding to 0.35 seconds. That is, Fig. 5C shows that the time during which the predetermined change was detected, i.e., the time that is considered as time during which the user inhaled on the flavor inhaler or the like 100, is 0.35 seconds in 0.52 seconds that is the time elapsed since completion of selection of the UI component 510.

There may be a case that a single inhalation action performed by a user is intermittent. For example, there may be a case that a user stops breathing due to occurrence of shortness of breath or the like, during a single inhalation action. The system 200 may determine that interruption of inhalation has occurred, if the predetermined change is not detected for a time equal to or longer than a predetermined period of time.

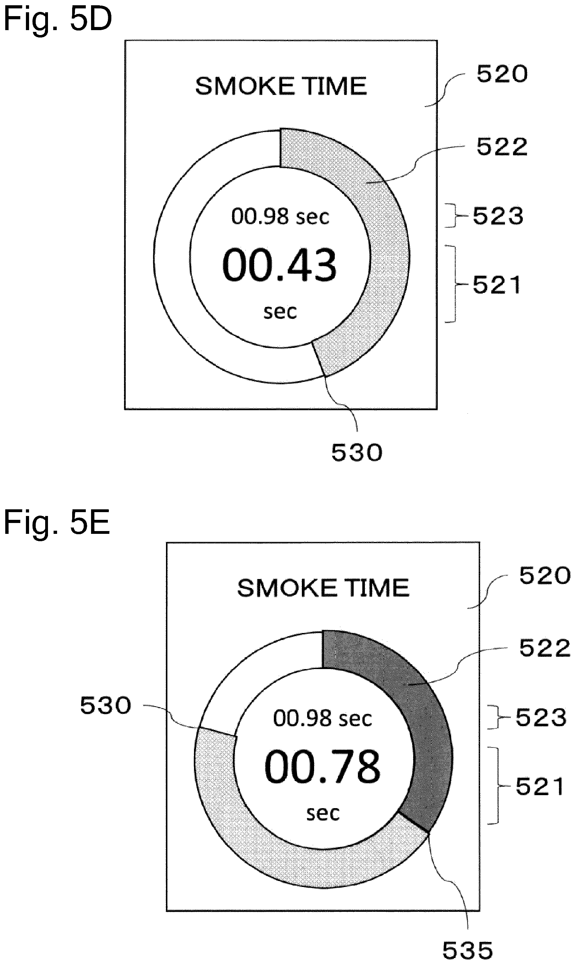

Fig. 5D shows an example of the UI component 520 in the state after occurrence of interruption of inhalation. It should be reminded that, in this example, it is assumed that interruption of inhalation occurred when the state of the UI component 520 became that shown in Fig. 5C. In Fig. 5D, the elapsed time 523 is 0.98 seconds. On the other hand, the detection time 521 is 0.43 seconds, and the present value 530 of the gauge 522 also represents a value corresponding to 0.43 seconds. That is, Fig. 5D shows the UI component 520 in the case that the time during which the predetermined change was detected is reset once, as a result of interruption of inhalation; and shows that the time during which the predetermined change was detected after occurrence of interruption of inhalation is 0.43 seconds. In this regard, the UI component 520 can show an event of occurrence of interruption of inhalation; and an example thereof is to display the gauge 522 in Fig. 5D, which is in a state after occurrence of interruption of inhalation, in a manner different from the manner that the gauge 522 in Fig. 5C, which is in a state before occurrence of interruption of inhalation, is displayed.

Fig. 5E shows a different example of the UI component 520 in the state after occurrence of interruption of inhalation. It should be reminded that, in this example, it is assumed that interruption of inhalation occurred when the state of the UI component 520 became that shown in Fig. 5C. In Fig. 5E, the elapsed time 523 is 0.98 seconds. On the other hand, the detection time 521 is 0.78 seconds, and the present value 530 of the gauge 522 also represents a value corresponding to 0.78 seconds. That is, Fig. 5E shows the UI component 520 in the case that the time during which the predetermined change was detected is not reset once, even if interruption of inhalation occurred; and shows that the time during which the predetermined change was detected before and after occurrence of interruption of inhalation is 0.78 seconds. In this regard, the UI component 520 can show an event of occurrence of interruption of inhalation; for example, in Fig. 5E, the parts before and after 535, that is the point that interruption of inhalation occurred, of the gauge 522 are displayed differently from each other.

For each of the first way to inhale, the second way to inhale, and the third way to inhale, at least, time that is assumed to be a duration of time that a user inhales during a single inhalation action is defined (for example, one second, two seconds, and three seconds, respectively; and the time is referred to as "reference time") as a parameter.

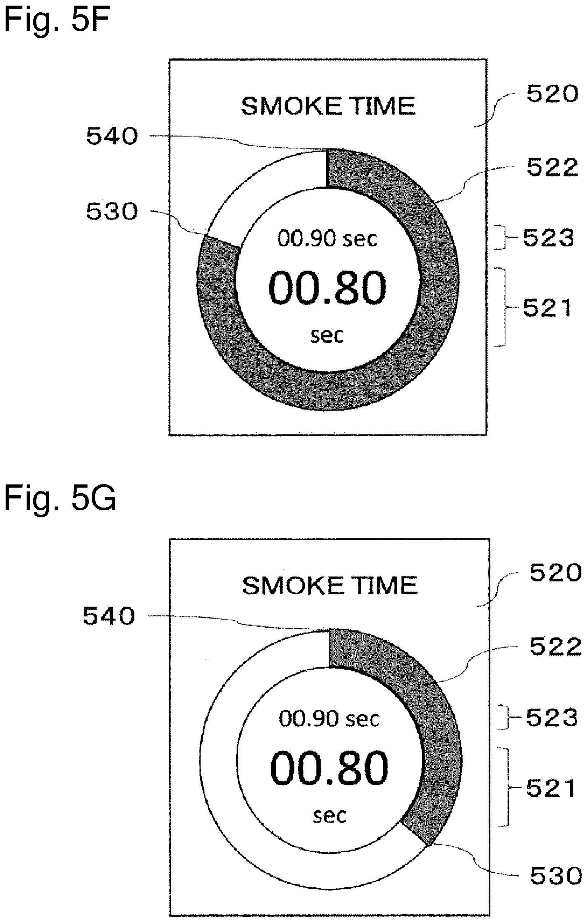

Each of Fig. 5F and Fig. 5G shows an example of the UI component 520 in the state at the point in time that 0.90 seconds has elapsed since completion of selection of the UI component 510. In each of Fig. 5F and Fig. 5G, the detection time 521 is 0.80 seconds; however, the apparent positions of the present values 530 (each of them represents 0.80 seconds) of the gauges 522 in the figures are different from each other. This is because the maximum vales 522 of the gauges in Fig. 5F and Fig. 5G are defined as 1.0 second and 2.0 seconds, respectively. In this way, when performing checking of a way to inhale, by defining the maximum value of the gauge 522 based on a reference time defined in the way to inhale, a user is allowed to visually understand, with respect to the time of inhalation, whether the user's way to inhale agrees with the way to inhale that is being used for checking. For example, in the gauge 522 such as that shown in each of Figs. 5A-5H, if the maximum value of the gauge is defined based on the reference time defined in a way to inhale that is used in checking, it is specially advantageous since a user can perform an expected way to inhale in terms of the reference time by inhaling in such a manner that the position of the value of the gauge moves just one round.

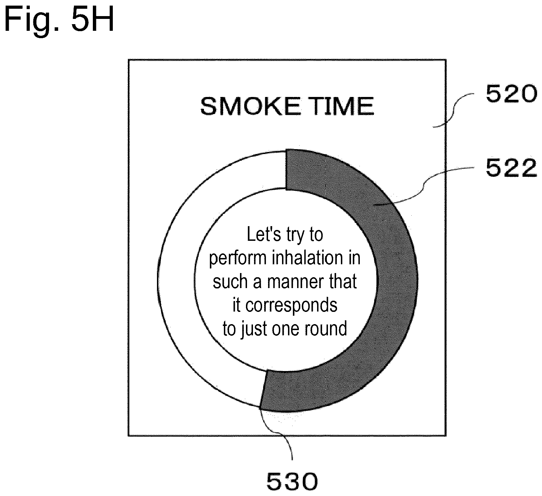

In this regard, in the UI component 520, it is possible to display remaining time relating to the time since checking of the way to inhale is started until the reference time is elapsed, in place of or in addition to the elapsed time 523. Further, in the UI component 520, the reference time itself may be displayed. Still further, in the UI component 520, the detection time 521 and the elapsed time 523 may not be displayed, and Fig. 5H shows such examples.

Further, the parameter defined in relation to the way to inhale may include strength of inhalation.

### 3-3. Screen for Displaying Result

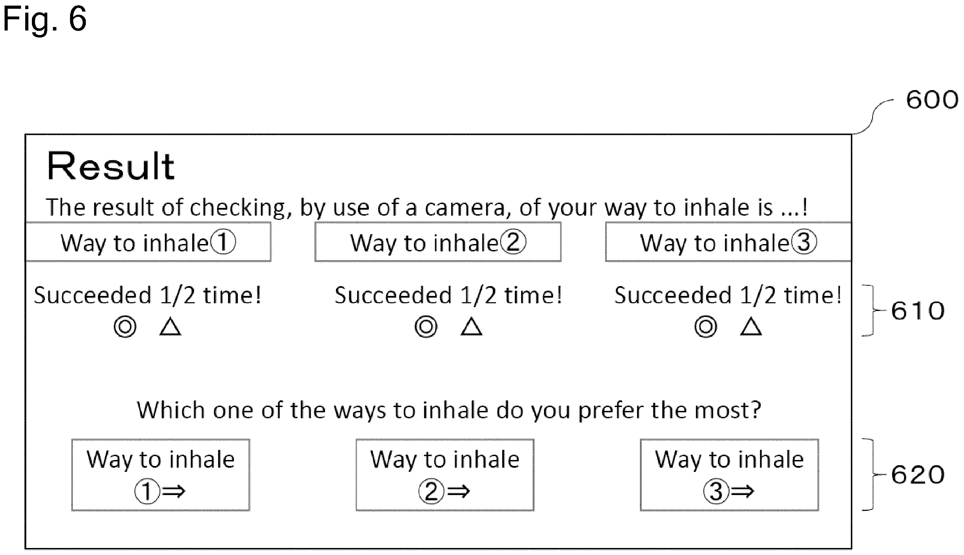

Fig. 6 shows an example screen (hereinafter, this will be referred to as "result displaying screen") 600 displaying result of checking of a way to inhale by a user on the flavor inhaler or the like 100.

610 denotes result of checking of each of the first way to inhale, the second way to inhale, and the third way to inhale. More specifically, checking of a way to inhale may comprise a process for determining, for each way to inhale, whether the reference time defined in the way to inhale and the time during which the predetermined change was detected agree within a predetermined error range. The result 610 in this example shows that checking was performed two times for each of the first way to inhale, the second way to inhale, and the third way to inhale; and that the reference time defined in the way to inhale and the time during which the predetermined change was detected agree within a predetermined error range only one time for each way to inhale. The predetermined error is 0.2 seconds, for example; however, the error is not limited to the above value, and may be a predetermined different value including zero, a value obtained by multiplying the reference time by a predetermined percentage, or the like. Further, the predetermined error is not limited to those explained above. It should be reminded that the above determination process may comprise a process for determining, for each way to inhale, whether the strength of inhalation defined in the way to inhale and the strength of user's inhalation estimated based on an output from the detection part 210 agree within a predetermined error range.

620 denotes an example of a UI component used for selecting one of the first way to inhale, the second way to inhale, and the third way to inhale. The UI component 620 may be configured to allow selection for one or more ways to inhale from the first way to inhale, the second way to inhale, and the third way to inhale.

The UI component 620 may be that allowing a user to select a way to inhale that a user prefers; and the system 200 is able to send the selected way to inhale to the server 330, and the server 330 may perform statistical processing based on the received selected way to inhale. In this regard, the UI component 620 may be configured in such a manner that only a way(s) to inhale for which the defined reference time and the time during which predetermined change was detected agree within a predetermined error range at least one time is(are) allowed to be selected, and, for example, the UI component 620 corresponding only to such a way(s) to inhale may be displayed. In this way, possibility that a way to inhale, that is to be sent to the server 330, reflects experience of a user is increased, and, further, reliability relating to statistical processing in the server 330 can be improved.

It should be reminded that the UI component 620 may be that used for selecting a way to inhale that a user did not prefer, a way to inhale that made a user satisfied, and so on.

### 3-4. Screen for Displaying References

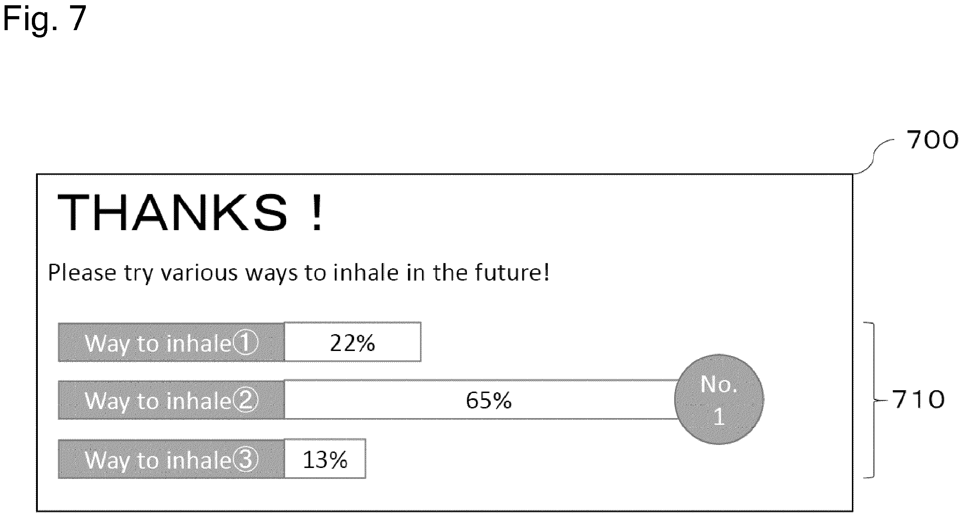

Fig. 7 shows an example screen (hereinafter, this will be referred to as "reference displaying screen") for displaying reference information to a user.

710 denotes a graph showing percentages of users who prefer the first way to inhale, the second way to inhale, and the third way to inhale, respectively. Data used for displaying the graph 710 can be generated by the server 330 by performing statistical processing based on ways to inhale that are selected by a plurality of users and received from a plurality of systems 200. The graph 710 is an example of information representing ways to inhale selected by a plurality of users.

The reference displaying screen 700 may display recommendation information based on selected ways to inhale, in addition to or in place of the graph 710. An example of such recommendation information is information relating to a recommended flavor (flavor component). Specifically, a preferable way to inhale may vary with each flavor. For example, if the system 200 receives from a user a selection indicating that the first way to inhale which reference time is one second is more preferable, the system 200 displays, as recommendation information, information relating to flavors which preferable reference time is one second. In this regard, as data to be used for displaying recommendation information, data stored in the system 200 in advance may be used, or data generated by the server 330 by performing statistical processing based on ways to inhale that are selected by a plurality of users and received from a plurality of systems 200 may be used. In the latter case, the system 200 may display a screen (not shown in the figures) which allows a user to select a flavor which is presently used in the flavor inhaler or the like 100, and send the selected flavor to the server 330; and the server 330 may generate data used for displaying information relating to a recommended flavor, by performing statistical processing based on flavors selected by a plurality of users and ways to inhale selected by a plurality of users.

### 3-5. Screen for Rechecking or Practicing Way to inhale

In the display part 220, a screen for rechecking or practicing a way to inhale (not shown in the figures) for allowing a user to recheck or practice a selected way to inhale may be displayed. The screen for rechecking or practicing a way to inhale may comprise a UI control 510 and a UI control 520 corresponding to a selected way to inhale.

### 4. Method Performed by System 200

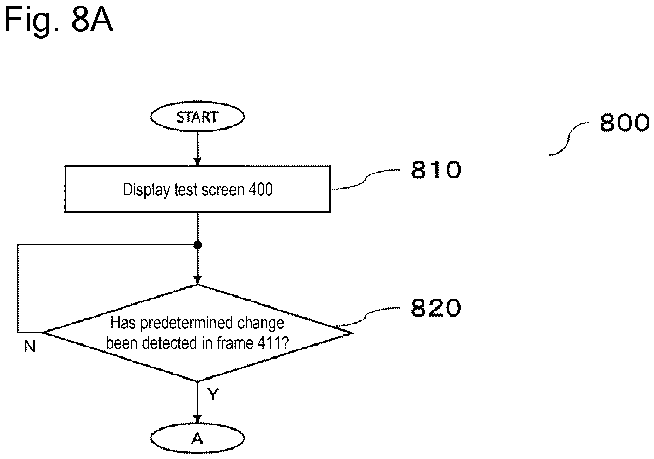

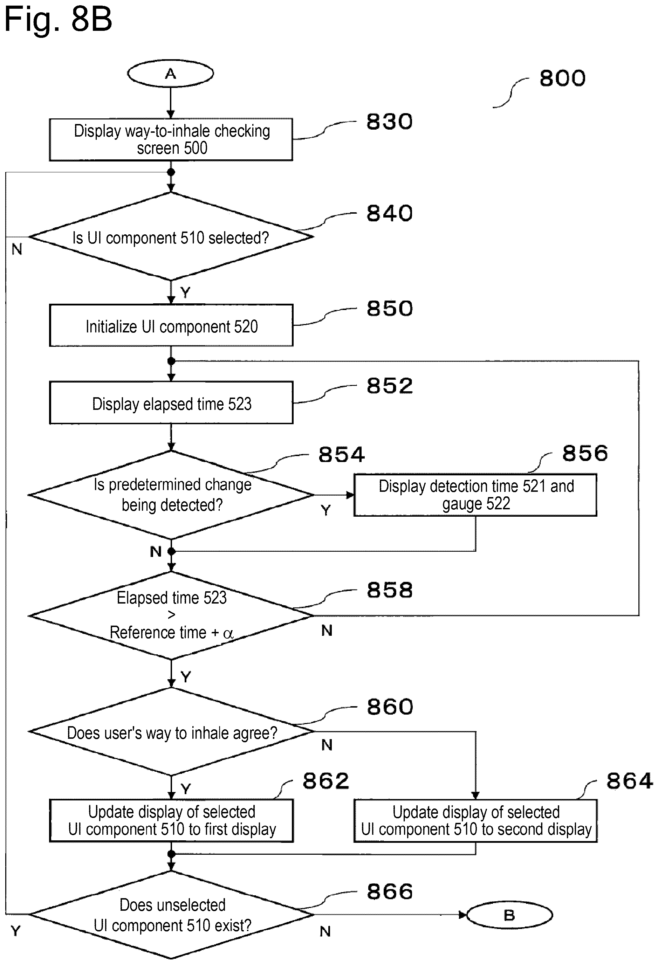

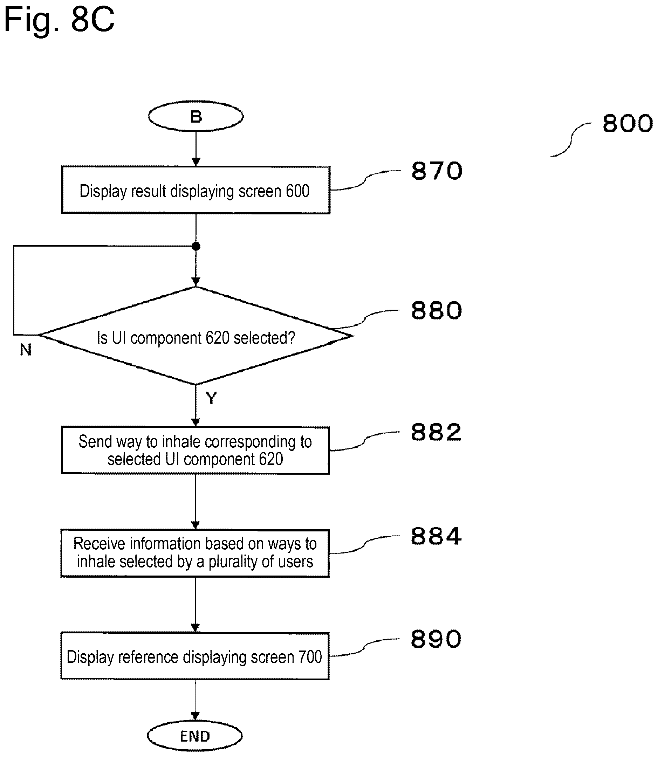

Each of Figs. 8A-8C shows a flowchart of an example method 800 performed by the system 200. More specifically, the example method 800 may be performed by the control part 260 of the system 200.

810 denotes a step for displaying the test screen 400 in the display part 220.

820 denotes a step for determining whether predetermined change, that occurs in at least part of the flavor inhaler or the like 100, has been detected in the frame 411 in the real time image 410. If the predetermined change has been detected, the process proceeds to step 830, and, if not, step 820 is repeated. It should be reminded that, if the predetermined change and other types of change can be clearly distinguished, the frame 411 is not necessarily required; and the determination process may be that for determining whether the predetermined change, that occurs in at least part of the flavor inhaler or the like 100, has been detected in the whole real time image 410.

830 denotes a step for displaying the way-to-inhale checking screen 500 in the display part 220.

840 denotes a step for determining whether a UI component 510 has been selected. This step comprises a step for receiving, as a selection, a way to inhale in a plurality of ways to inhale, that corresponds to a selected UI component. In the case that it is determined that a UI component 510 has been selected, the process proceeds to step 850, and, if not, step 840 is repeated.

850 denotes a step for initializing the UI component 520. This step comprises a step for defining, based on a reference time defined in the selected way to inhale, a maximum value 540 of the gauge 522. Further, this step may comprise a step for displaying, to a user by use of the display part 220, an instruction relating to the way to inhale ("Please inhale harder than usual" and so on), or a message such as "Start" or the like for informing that checking of the way to inhale has been started.

852 denotes a step for displaying the elapsed time 523 in the display part 220. This step comprises a step for updating display of the elapsed time 523.

854 denotes a step for determining, based on an output from the detection part 210, whether the predetermined change is being detected. This step comprises a step for detecting, based on an output from the detection part 210, the predetermined change. If it is determined that the predetermined change is being detected, the process proceeds to step 856, and, if not, the process proceeds to step 858.

856 denotes a step for displaying the detection time 521 and the gauge 522 in the display part 220. This step comprises a step for updating display of the detection time 521 and the gauge 522.

858 denotes a step for determining whether the elapsed time 523 is larger than "the reference time + α." α is 0.2 seconds, for example; however, α is not limited the above value, and it may be a different predetermined value including zero, a value obtained by multiplying the reference time by a predetermined percentage, or the like. If the elapsed time 523 is larger than "the reference time + α," the process proceeds to step 860, and, if not, the process returns to step 852.

860 denotes a step for determining whether the user's way to inhale agrees with the way to inhale corresponding to the selected UI component 510. This step may comprise a step for determining whether the reference time which is defined in the way to inhale corresponding to the selected UI component 510, and the detection time 521 agree within a predetermined error range. Although the error range may be the same as above α, α is not limited thereto. Further, the above step may comprise a step for determining whether the strength of user's inhalation and the strength of inhalation defined in the way to inhale corresponding to the selected UI component 510 agree within a predetermined error range. If the ways to inhale agree, the process proceeds to step 862, and, if not, the process proceeds to step 864.

862 and 864 denote steps for updating display of selected UI component 510 to first display (a symbol of a "double circle" in this example) and second display (a symbol of a "triangle" in this example), respectively. In this regard, each of these steps may comprise a step for displaying, to a user, a message such as "End" or the like for informing completion of checking of the way to inhale.

866 denotes a step for determining whether a UI component 510, that has not yet been selected, exists. If it exists, the process returns to step 840, and, if not, the process proceeds to step 870.

870 denotes a step for displaying the result displaying screen 600 in the display part 220. This step may comprise a step for displaying, in the display part 220 via the result displaying screen 600, messages relating to the basis for selecting a way to inhale that is to be selected (for example, "Please select a way to inhale that was good," "Please select a way to inhale that was not good," "Please select a way to inhale that made you satisfied," or the like).

880 denotes a step for determining whether a UI component 620 has been selected. This step comprises a step for receiving, as a selection, a way to inhale that is one of ways to inhale and corresponds to a selected UI component 620. If it is determined that a UI component 620 has been selected, the process proceeds to step 882, and, if not, the process repeats step 880.

882 denotes a step for sending the selected way to inhale to the server 330.

884 denotes a step for receiving, form the server 330, data used for displaying information representing ways to inhale selected by a plurality of users. This step may comprise a step for receiving, form the server 330, data used for displaying recommendation information.

890 denotes a step for displaying the reference displaying screen 700 in the display part 220. Step 890 may be that for displaying, in place of or in addition to the reference displaying screen 700, a screen for rechecking or practicing a way to inhale.

### 5. Computer

In the following description, an example of a hardware configuration of a computer, which can be used as the system 200 or the server 300 or can be used for configuring the system 200 or the server 300, will be explained.

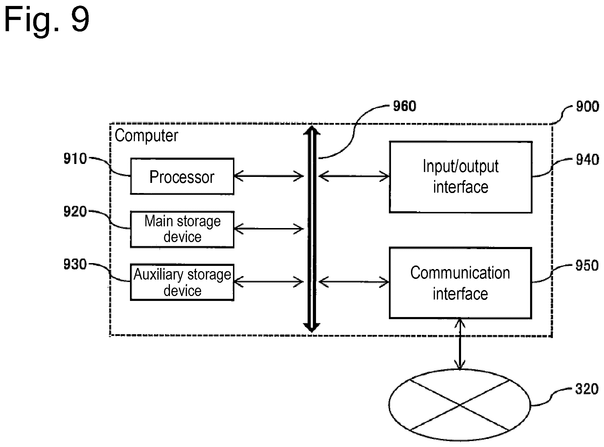

Fig. 9 shows an example of a hardware configuration of a computer. As shown in the figure, a computer 900 comprises, as hardware resources, a processor 910, a main storage device 920, an auxiliary storage device 930, an input/output interface 940, and a communication interface 950, mainly; and these resources are mutually connected via a bus line 960 which comprises an address bus, a data bus, a control bus, and so on. It should be reminded that there may be a case that an interface circuit(s) (which is(are) not shown the figure) is(are) interposed between the bus line 960 and the respective hardware resources in an appropriate manner.

The processor 910 performs control of the whole computer.

The main storage device 920 provides a work area for the processor 910, and is a volatile memory such as a SRAM (Static Random Access Memory), a DRAM (Dynamic Random Access Memory), or the like.

The auxiliary storage device 930 is a non-volatile memory such as a HDD or a SSD, or a flash memory or the like for storing a program and so on and data and so on that are software. The program, the data, and so on are loaded on the main storage device 920, at arbitrary points in time, from the auxiliary storage device 930 via the bus line 960.

The input/output interface 940 is that for performing a process for presenting information and/or a process for receiving an input of information, and may comprise a digital camera, a keyboard, a mouse, a display, a touch panel display, a microphone, a speaker, a temperature sensor, and so on.

The communication interface 950 is that connected to the network 320 and sending/receiving data via the network 320. The communication interface 950 and the network 320 may be connected to each other in a wired or wireless manner. The communication interface 950 may also obtain information relating to a network, for example, information relating to a Wi-Fi access point, information relating to a base station of a communication carrier, and so on.

It would be apparent to a person skilled in the art that the computer 900 functions as desired means, performs desired steps, and can realize desired functions, as a result of cooperation between the above example hardware resources and software.

In the above description, some examples of embodiments of the present invention have been explained; and, in this regard, it should be understood that they are mere examples, and they are not those limiting the technical scope of the present invention. It should be understood that change, addition, and modification with respect to the embodiments can be performed appropriately, without departing from the gist and the scope of the present disclosure. The technical scope of the present invention should not be limited by any of the above-explained embodiments, and should be limited by the claims and equivalents thereof only.

### REFERENCE SIGNS LIST

- 161, 162: End
- 310A, 310B: Detection of externally observable predetermined change
- 320: Network
- 400: Test screen
- 410: Real time image
- 411: Frame
- 500: Screen for checking a way to inhale
- 510: UI component for performing checking of a way to inhale
- 520: UI component for displaying information indicating that externally observable predetermined change is being detected
- 521: Detection time
- 522: Gauge
- 523: Elapsed time
- 530: Present value of gauge 522
- 535: Interruption of inhalation
- 540: The maximum value of gauge 522
- 600: Screen for displaying result
- 610: Result
- 620: UI component for selecting a way to inhale
- 700: Screen for displaying references
- 710: Graph showing respective percentages of users who prefer respective ways to inhale

## Claims

1. A program causing a computer to perform steps of:
detecting externally observable predetermined change that occurs in at least part of a flavor inhaler or an aerosol generation device, wherein the predetermined change occurs based on a user's action of inhalation on the flavor inhaler or the aerosol generation device; and
displaying information indicating that the predetermined change is being detected.

2. The program recited in Claim 1, wherein the flavor inhaler or the aerosol generation device includes a first end and a second end, one of the first end and the second end is an end that is to be mouthed by the user for inhaling, and the other of the first end and the second end is an end that includes the at least part.

3. The program recited in Claim 1 or 2, wherein the predetermined change comprises emission of light having a predetermined color.

4. The program recited in any one of Claims 1 to 3, wherein the information indicating that the predetermined change is being detected comprises a time and/or a gauge, wherein the time and a value of the gauge increase when the predetermined change is being detected.

5. The program recited in Claim 4, wherein the program causes the computer further to perform steps of:
receiving a selection for one of a plurality of ways to inhale, wherein reference times are defined respectively in the plurality of ways to inhale; and
defining a maximum value of the gauge based on the reference time defined in the selected way to inhale.

6. The program recited in any one of Claims 1 to 4, wherein the program causes the computer further to perform steps of:
determining, for each of the plurality of ways to inhale in which the reference times are defined respectively, whether the reference time defined in the way to inhale and a time during which the predetermined change was detected agree within a predetermined error range; and
displaying a result of the determination for each of the plurality of ways to inhale.

7. The program recited in any one of Claims 1 to 4, wherein the program causes the computer further to perform steps of:
allowing a user to select at least one of the plurality of ways to inhale in which reference times are defined respectively, wherein the at least one is a way to inhale that the reference time defined in the way to inhale and the time during which the predetermined change was detected agree within the predetermined error range;
sending the selected way to inhale to another computer; and
displaying, based on data received from another computer, information indicating a way to inhale selected by a plurality of users.

8. The program recited in any one of Claims 1 to 4, wherein the program causes the computer further to perform steps of:
allowing a user to select at least one of the plurality of ways to inhale in which reference times are defined respectively, wherein the at least one is a way to inhale that the reference time defined in the way to inhale and the time during which the predetermined change was detected agree within the predetermined error range; and
displaying recommendation information based on the selected way to inhale.

9. The program recited in any one of Claims 1 to 4, wherein the program causes the computer further to perform steps of:
allowing a user to select at least one of the plurality of ways to inhale in which reference times are defined respectively, wherein the at least one is a way to inhale that the reference time defined in the way to inhale and the time during which the predetermined change was detected agree within the predetermined error range; and
allowing a user to check or practice the selected way to inhale.

10. A method performed by a computer including steps of:
detecting externally observable predetermined change that occurs in at least part of a flavor inhaler or an aerosol generation device, wherein the predetermined change occurs based on a user's action of inhalation on the flavor inhaler or the aerosol generation device; and
displaying information indicating that the predetermined change is being detected.

11. A system comprising:
a detection part;
a display part; and
a control part configured to:
detect, based on an output from the detection part, externally observable predetermined change that occurs in at least part of a flavor inhaler or an aerosol generation device, wherein the predetermined change occurs based on a user's action of inhalation on the flavor inhaler or the aerosol generation device, and
display, in the display part, information indicating that the predetermined change is being detected.
